# EUROPEAN PATENT APPLICATION

(11) **EP 3 633 441 A1**
(43) Date of publication of application: **08.04.2020**
(21) Application number: 19163415.3
(22) Date of filing: 18.03.2019
(51) Int. Cl.: G02C 11/04

(54) **AMBIENT LIGHT ADJUSTABLE EYEGLASSES**

(30) Priority: 03.10.2018 US 201862740948 P; 15.03.2019 US 201916355360
(71) Applicant: De La Fuente, Carlos, San Diego, CA 92101 (US)
(72) Inventor: De La Fuente, Carlos, San Diego, CA 92101 (US)
(74) Representative: Schaumburg und Partner Patentanwälte mbB

(57) **Abstract**

An ambient light adjustment eyeglasses comprising eyeglasses frame; one or more LEDs carried by the eyeglasses frame; one or more light adjustment sensors carried by the eyeglasses frame; one or more circuits carried by the frame that control light intensity emitted by the one or more LEDs based on ambient light.

## Description

### Field of the Invention

The present invention relates to a specialized set of LED eye glasses that are sensitive to the ambient light and adjust the intensity of their LED light to compensate for less illumination while enhancing the user's ability to see things better.

### Background of the Invention

According to the Vision Council of America, approximately 75% of all adults use some form of vision correction: 64% wear eyeglasses and about 11% wear contact lenses, either exclusively or in combination. Full reading glasses are suitable for people who spend a great deal of time concentrating on material that requires close-up vision. This gives people a larger view for reading. If they look up at a distance, their vision will become blurry. To overcome this deficiency, bifocal glasses have been invented. It is often recommended that when reading, a person use two sources of lighting. One of the best means of direct controlled beams of light is using an LED. The problem is that as the person moves away from the light source, the viewing area gets dimmer.

Reading must be done in good, proper lighting. The better the lighting, the less stress on the eyes. One of the advantages of using LED's that are mounted on the eyeglasses is that they provide overlapping beamed conical lights thus providing the best lighting for reading. There is a need in the field for LED reading glasses that can adjust to the changing lighting conditions. One novel approach is to create a means of reading glasses that can adjust the lighting of the user's surroundings by taking into mind the ambient lightening. The eyeglasses should adjust to the ambient lighting source so as the lighting gets brighter the eyeglass lighting diminishes in intensity and as the lighting becomes dimmer a brighter beam of lighting occurs.

### Summary of the Invention

An aspect of the present invention involves a specialized vision enhancing device that considers the ambient light intensity to cause its LEDs to increase or decrease light intensity so that the user can enhance their reading and viewing experience. Additionally, the invention has the ability to provide a means of quickly replenishing its power source by quickly detaching one of its legs. Additionally, the invention has the ability to enhance the hearing experience of the user with attachable speaker earpieces.

One of the advantages of using an LED is that they provide a power lighting source with minimal power consumption. Compared to conventional lighting they save up to 90% of power consumption.

Another advantage of using an LED source is that very little heating takes place. Another advantage is that they are capable of outputting 135 lumens/watt and have a long-life expectancy which can be up to 100,000 hours if properly engineered. This is the equivalent of 11 years of continuous use or 22 years of 50% use. LED's are also extremely durable, and operate efficiently in either very cold or hot temperatures. They are at full intensity when turned on and require no warm up time. Additionally, LEDs are easily manipulated to control light intensity, which is what is done in the present invention in response to the ambient light.

Another aspect of the invention is a reliable, efficient, and effective light source that is practical for a use under various lightening scenarios. The ambient light sensor reads the amount of light that is around the user and controls the intensity of the LED's to illuminate a predetermined output. Optionally, the invention has the ability to easily replace its rechargeable battery source for extended use, and may have the option of having a hearing device to provide soothing music while the user is reading.

A further aspect of the invent involves an ambient light adjustment eyeglasses comprising eyeglasses frame; one or more LEDs carried by the eyeglasses frame; one or more light adjustment sensors carried by the eyeglasses frame; one or more circuits carried by the frame that control light intensity emitted by the one or more LEDs based on ambient light.

One or more implementations of the aspect of the invention described immediately above includes one or more of the following: the one or more circuits increase light intensity emitted by the one or more LEDs when ambient light is less and decrease light intensity emitted by the one or more LEDs when ambient light is more; light-sensitive eyeglass lenses that adjust in darkness based on ambient light levels; the eyeglasses frame includes a temple; the temple includes a battery that powers the one or more LEDs, a power switch to turn on and off power supplied by the rechargeable battery, a power indicator, and a charging port; the temple includes a forward facing distal end, and the one or more LEDs are disposed at the forward-facing distal end of the temple; the eyeglass frame includes a pair of temples, a rim, a bridge, and end pieces, and the one or more LEDs are disposed at one or more of the pair of temples, the rim, the bridge, and/or the eyeglass frame includes a pair of temples, a rim, a bridge, and end pieces, and the one or more light adjustment sensors are disposed at one or more of the pair of temples, the rim, the bridge, and the end pieces.

These and other aspects and advantages of the present invention will become apparent from the following detailed description, which, when taken in conjunction with the accompanying drawings, illustrates by way of example the principles of the invention.

### Brief Description of Drawings

The preferred embodiments of the invention will hereinafter be described in conjunction with the appended drawings provided to illustrate and not to limit the invention, in which:
FIG. 1 presents a perspective view of an exemplary embodiment of light adjustable LED eyeglasses.
FIG. 2 presents a perspective view of an exemplary embodiment of a temple of the light adjustable LED eyeglasses of FIG. 1.
FIG. 3 is an elevational view of an exemplary embodiment of electronics in the temple of FIG. 2.

While the various features of this invention are hereinafter described and illustrated as being particularly adapted for providing rigidity to instrument devices the invention is not limited to the embodiments illustrated in the drawings but are merely used to illustrate the wide variety of uses of this invention. Therefore, the foregoing is considered as illustrative only of the principles of the invention. Since numerous modification and changes will readily occur by those skilled in the art, it is not desired to limit the invention to the exact construction and operation shown and described and accordingly, all suitable modifications and equivalents may be resorted to, falling within the scope of the invention.

### Description of Embodiment of the Invention

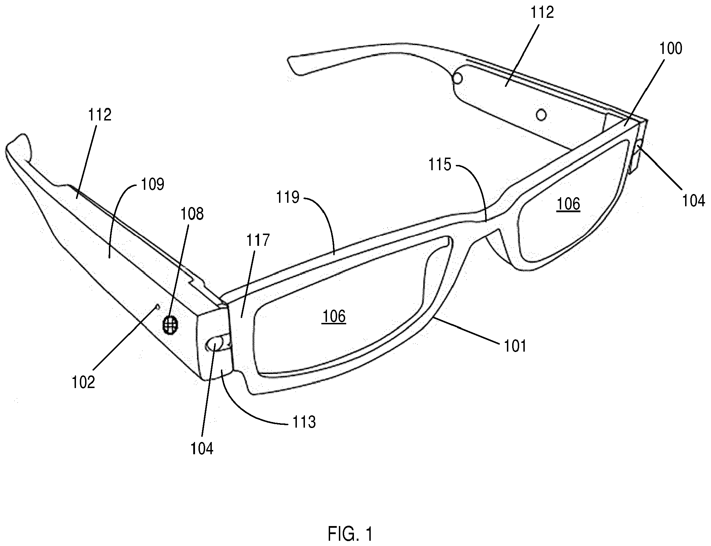

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims. For purposes of description herein, the terms "upper", "lower", "left", "rear", "right", "front", "vertical", "horizontal", and derivatives thereof shall relate to the invention as oriented in FIG. 1. Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

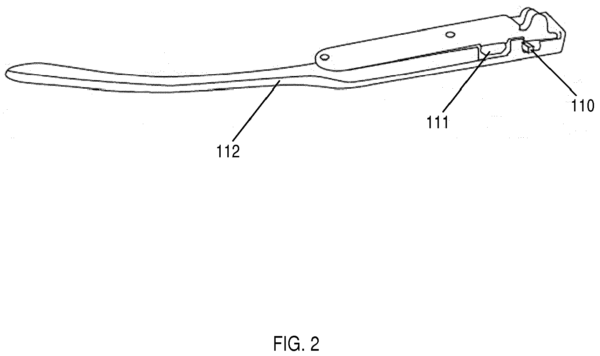

With respect to FIGS. 1 and 2, a perspective view of a preferred embodiment is illustrated describing the key components of the ambient light adjustment eyeglasses (100), which includes an eyeglass frame (101). One or more adjustable LEDs (104) are illustrated on both sides of the eyeglasses (100) that adjust to the ambient light. The control of the light intensity is accomplished by one or more light adjustment sensor(s) (108), which may be on a side (109) of the temple (112), and sends more power to the LEDs (104) through one or more circuits (132). The one or more circuits (132) increase light intensity emitted by the one or more LEDs (104) when ambient light is less and decrease light intensity emitted by the one or more LEDs (104) when ambient light is more. A power switch (110) turns on and off the device and a power indicator (102) lets the user know that the device is in the on position. Rechargeable battery (130) is charged via a charging port (111). The one or more LEDs (104) are disposed on a distal end (113) of the temple (112) and emanate light forward, forward of the lens(es) (106).

In alternative embodiments, the one or more LEDs (104) and/or the one or more light adjustment sensor(s) (108) are disposed at one or more other and/or additional locations of the frame (101) such as, but not limited to, bridge (115), end pieces (117), and/or rims (119).

Lens(es) (106) can be a specialized lens(es) that adjust(s) with brightness of the ambient light.

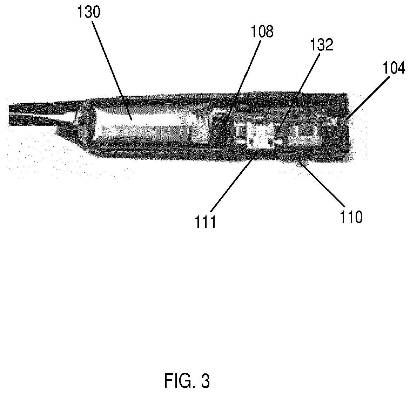

FIG. 3 shows the following electronics in the temple (102): the specialized adjustable LED(s) (104), the charging port (111), an embedded circuit board/one or more circuits (132), the rechargeable battery (130), and the adjustable light sensor (108), which is used to determine how much power to send to the LEDs (104).

The above figures may depict exemplary configurations for the invention, which is done to aid in understanding the features and functionality that can be included in the invention. The invention is not restricted to the illustrated architectures or configurations but can be implemented using a variety of alternative architectures and configurations. Additionally, although the invention is described above in terms of various exemplary embodiments and implementations, it should be understood that the various features and functionality described in one or more of the individual embodiments with which they are described, but instead can be applied, alone or in some combination, to one or more of the other embodiments of the invention, whether or not such embodiments are described and whether or not such features are presented as being a part of a described embodiment. Thus, the breadth and scope of the present invention, especially in the following claims, should not be limited by any of the above-described exemplary embodiments.

Terms and phrases used in this document, and variations thereof, unless otherwise expressly stated, should be construed as open ended as opposed to limiting. As examples of the foregoing: the term "including" should be read as mean "including, without limitation" or the like; the term "example" is used to provide exemplary instances of the item in discussion, not an exhaustive or limiting list thereof; and adjectives such as "conventional," "traditional," "standard," "known" and terms of similar meaning should not be construed as limiting the item described to a given time period or to an item available as of a given time, but instead should be read to encompass conventional, traditional, normal, or standard technologies that may be available or known now or at any time in the future. Likewise, a group of items linked with the conjunction "and" should not be read as requiring that each and every one of those items be present in the grouping, but rather should be read as "and/or" unless expressly stated otherwise. Similarly, a group of items linked with the conjunction "or" should not be read as requiring mutual exclusivity among that group, but rather should also be read as "and/or" unless expressly stated otherwise. Furthermore, although item, elements or components of the disclosure may be described or claimed in the singular, the plural is contemplated to be within the scope thereof unless limitation to the singular is explicitly stated. The presence of broadening words and phrases such as "one or more," "at least," "but not limited to" or other like phrases in some instances shall not be read to mean that the narrower case is intended or required in instances where such broadening phrases may be absent.

## Claims

1. Ambient light adjustment eyeglasses (100), comprising:
eyeglasses frame (101);
one or more LEDs (104) carried by the eyeglasses frame;
one or more light adjustment sensors (108) carried by the eyeglasses frame;
one or more circuits (132) carried by the frame that control light intensity emitted by the one or more LEDs based on ambient light.

2. The ambient light adjustment eyeglasses of claim 1, wherein the one or more circuits increase light intensity emitted by the one or more LEDs when ambient light is less and decrease light intensity emitted by the one or more LEDs when ambient light is more.

3. The ambient light adjustment eyeglasses of claims 1-2, further including light-sensitive eyeglass lenses (106) that adjust in darkness based on ambient light levels.

4. The ambient light adjustment eyeglasses of claims 1-3, wherein the eyeglasses frame includes a temple (102).

5. The ambient light adjustment eyeglasses of claim 4, wherein the temple includes a battery (130) that powers the one or more LEDs, a power switch (110) to turn on and off power supplied by the rechargeable battery, a power indicator (102), and a charging port (111).

6. The ambient light adjustment eyeglasses of claims 1-5, wherein the temple includes a forward facing distal end, and the one or more LEDs are disposed at the forward-facing distal end (113) of the temple.

7. The ambient light adjustment eyeglasses of claims 1-6, wherein the eyeglass frame includes a pair of temples, a rim (119), a bridge (115), and end pieces (117), and the one or more LEDs are disposed at one or more of the pair of temples, the rim, the bridge, and the end pieces.

8. The ambient light adjustment eyeglasses of claims 1-7, wherein the eyeglass frame includes a pair of temples, a rim, a bridge, and end pieces, and the one or more light adjustment sensors are disposed at one or more of the pair of temples, the rim, the bridge, and the end pieces.
